# EUROPEAN PATENT APPLICATION

(11) **EP 2 372 862 A2**
(43) Date of publication of application: **05.10.2011**
(21) Application number: 11159255.6
(22) Date of filing: 22.03.2011
(51) Int. Cl.: H02J 3/38

(54) **Dc transmission system for remote solar farms**

(30) Priority: 30.03.2010 US 749561
(71) Applicant: General Electric Company, Schenectady, NY 12345 (US)
(72) Inventor: Sihler, Christof Martin, Niskayuna, NY 12309 (US); El-Barbari, Said Farouk Said, Niskayuna, NY 12309 (US)
(74) Representative: Bedford, Grant Richard

(57) **Abstract**

A DC transmission system (80) for solar arrays (84, 184, 284, 384) comprises a system DC link (82) for receiving power from the solar arrays (84, 184, 284, 384) through series coupled DC to DC converter (88, 188, 288, 388). DC to AC power converter modules (90, 190) are coupled in series between the system DC link (82) and a power grid (86).

## Description

The invention relates generally to high voltage direct current (HVDC) transmission and more specifically to HVDC transmission for remote solar farms.

In recent decades there has been a move towards the use of renewable resources to generate energy. Conventional systems based on the combustion of fossil fuels are perceived as having a detrimental effect on the environment. Although coal-fired power stations are still being constructed, energy generation is increasingly being supplemented by sources such as solar, wind, hydro-electric, and geothermal power generation.

Solar panels for converting solar energy to electricity have increased greatly in efficiency and popularity and are often incorporated in residential or business premises. However, solar technology still has some limitations. There is a relatively lengthy period before the initial capital outlay is recouped by the savings from the generated electricity. Home owners are less likely to install solar panels when it is possible that they will move from the premises before they see sufficient financial savings from the installed panels.

A new trend in solar energy is to install multiple solar panels in one or more arrays of a solar power generation system (or "farm") situated remotely from a particular load. In such embodiments, the solar energy is transmitted to load points or a power grid via three phase alternating current (AC) power transmission lines. However, AC power transmission lines have inherent limitations for long distances that result from cable capacitance and transmission line capacitances. Thus, a significant amount of reactive power is supplied from the solar farms and carried by the AC transmission lines in addition to the active power needed by the loads. The addition of the reactive power results in higher transmission losses, higher current ratings, and larger and more costly transmission lines or cables.

Therefore, there is a need for an improved solar power transmission system to address one or more aforementioned issues.

In accordance with an embodiment of the present invention, a direct current (DC) transmission system for solar arrays is provided. The system includes a system DC link which receives power from solar arrays through series coupled DC to DC converters. The system also includes DC to alternating current (AC) power converter modules coupled in series between the system DC link and a power grid.

In accordance with another embodiment of the present invention, a DC power transmission method is provided. The method includes providing a system DC link for receiving power from the solar arrays through series coupled DC to DC converters and coupling at least two DC to alternating current (AC) power converter modules in series between the system DC link and a power grid. The method also includes driving a current of the system DC link towards a commanded value.

In accordance with yet another embodiment of the present invention, a DC transmission system for solar arrays comprising a system DC link for receiving power from the solar arrays through series coupled DC to DC converter is provided. The system also includes DC to AC current source power converter modules coupled in series between the system DC link and a power grid.

Varius features, aspects, and advantages of the present invention will become better understood when the following detailed description is read with reference to the accompanying drawings in which like characters represent like parts throughout the drawings, wherein:
FIG. 1 is a schematic illustration of a conventional solar power generation system;
FIG. 2 is schematic representation of a grid connected large scale solar power generation system;
FIG. 3 is a schematic representation of a DC transmission system for remote solar farms in accordance with an embodiment of the present invention;
FIG. 4 is block diagram of one converter embodiment in accordance with an embodiment of the present invention;
FIG. 5 is a block diagram of another converter embodiment in accordance with another embodiment of the present invention;
FIG. 6 is a block diagram of another converter embodiment in accordance with still another embodiment of the present invention; and
FIG. 7 is a schematic representation of a DC transmission system employing a current source inverter for the grid connection in accordance with an embodiment of the present invention.

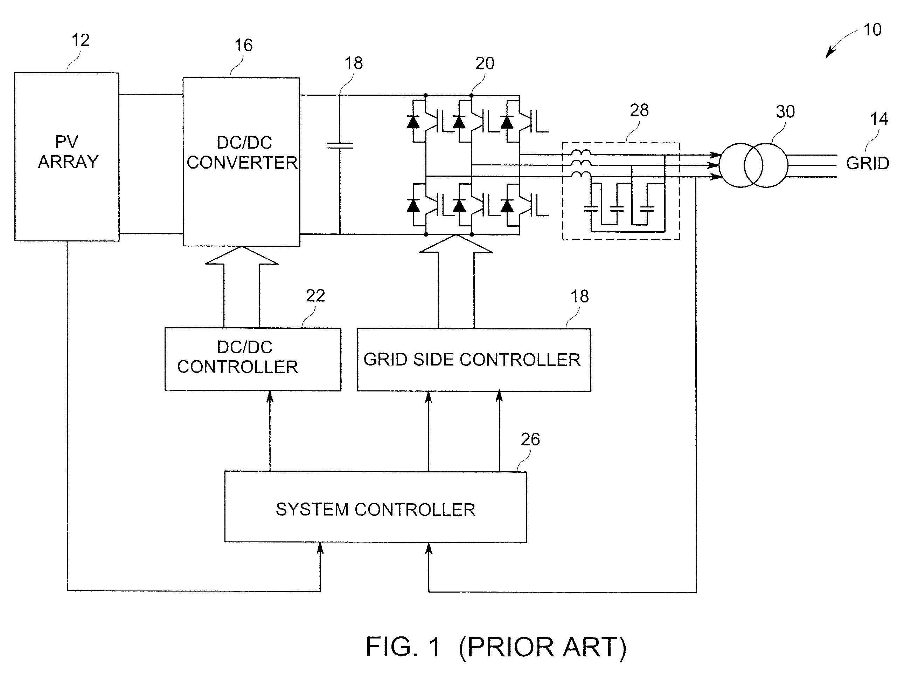

FIG. 1 illustrates a conventional solar power generation system 10. The power generation system includes a PV array 12 including a plurality of connected PV modules (not shown). The PV array is connected to a power grid 14 through a DC/DC converter 16, a DC link 18, and a grid side three-phase DC/AC converter 20. In other systems, the grid side three-phase converter may be replaced by multiple single-phase converters. The DC/DC converter 16 maintains a constant DC voltage at the DC link 18, and thus the energy flow from the PV module 12 to the power grid 14 is managed. The DC/DC converter 16 is controlled by a DC/DC controller 22, and the grid side converter 20 is controlled by a grid side controller 24. A system controller 26 generates a reference DC voltage command, a reference output voltage magnitude command, and a reference frequency command for the DC/DC converter 22 and the grid side converter 20. In other systems, a single controller may be used for the multiple control functions shown in FIG. 1. Filters 28 are used in the system for removing harmonics from the system output power and transformer 30 is used for matching grid side converter output voltage to the grid voltage. Power Grid 14 may comprise a utility grid or any other system of connecting power generation systems and loads.

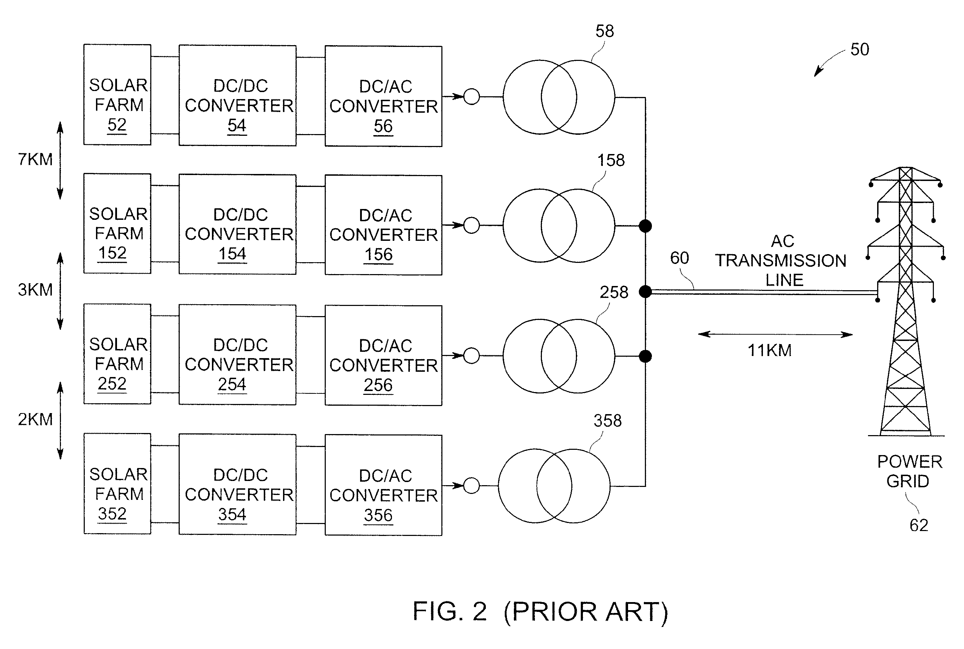

FIG. 2 shows a grid connected large scale solar power generation system 50. The system includes multiple PV arrays 52, 152, 252, and 352 and respective DC to DC converters 54, 154, 254, and 354. PV arrays 52, 152, 252, and 352 typically each include multiple PV modules (not shown) connected in series or in parallel to obtain higher voltage or higher current and may provide output voltage in the range of 300 V DC to 500 V DC, for example. A maximum power point tracking (MPPT) controller (not shown) controls DC to DC converters 54, 154, 254, and 354 to collect maximum power from the PV arrays. The PV arrays may be situated on one or more solar farms and located at a distance from each other such as in range of 2 kilometers to 10 kilometers, for example. Three phase DC to AC converters 56, 156, 256, and 356 each convert the DC power output of a respective DC to DC converter 54, 154, 254, 354 into AC power and transmit the AC power to a power grid or a load 62 through transformers 58, 158, 258, and 358 and an AC transmission line 60. Transformers step up the DC to AC converter voltages to a transmission line voltage level. All transformers are connected in parallel through distribution lines (not shown) and the total collected AC power is then transmitted over the AC transmission line 60 to the power grid.

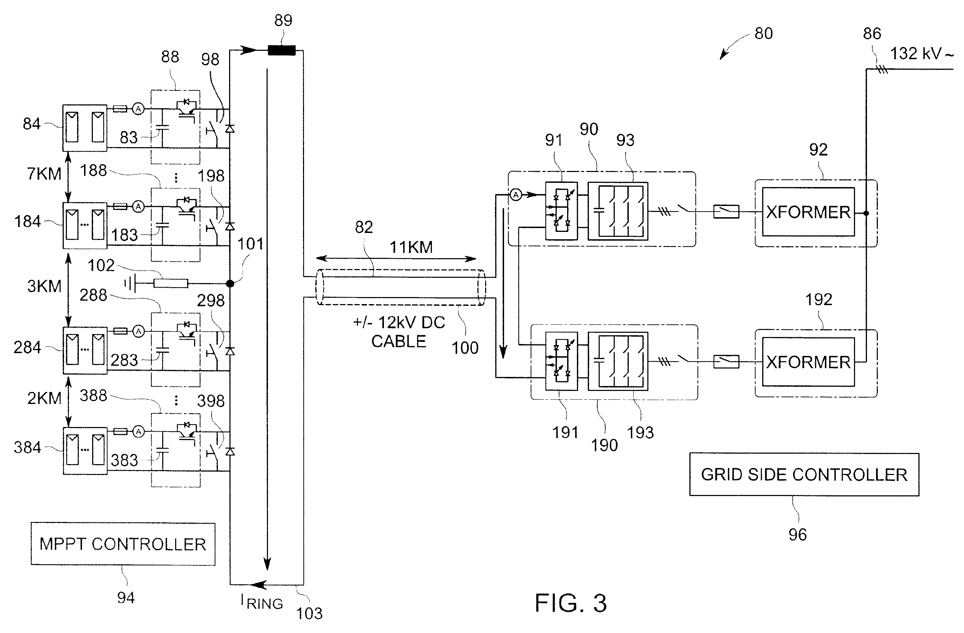

FIG. 3 shows a schematic of a DC transmission system 80 used for remotely located large scale solar power generation systems in accordance with an embodiment of the present invention. The system 80 comprises a system DC link 82 configured for carrying power from solar farms 84, 184, 284 and 384 to the power grid 86. The system 80 further includes DC to DC converters 88, 188, 288 and 388 coupling the solar farms to the system DC link 82 and DC to AC power converter modules 90 and 190 coupled in series to system DC link 82 on one end and to the grid 86 through transformers 92 and 192 on the other end.

The embodiment of FIG. 3 is useful for transmitting bulk solar power from a distant solar array or farm to the power grid or the load using DC transmission wherein the DC voltage level is at least medium (for example, 24 kilovolts). Typically the distances are greater than ten kilometers but what is considered "distant" will vary depending upon power requirements of the load. In some embodiments, for example, the load may be at a long distance from the solar farms such as more than 100 kilometers or may be at a short distance such as four kilometers to five kilometers. When used to supply power from remotely located solar farms, the embodiment of FIG. 3 is expected to reduce cost, complexity, and required space for power conversion equipment.

The DC to DC converters 88, 188, 288 and 388 on the solar farm side are coupled in series to the system DC link 82. In one embodiment, the DC to DC converters utilize inductance of the cable as an inductor or in another embodiment, a separate inductor 89 may be used to store the energy for effective operation of the DC to DC converter. In another embodiment, a maximum power point tracking (MPPT) controller 94 (which is typically separate from a grid side controller 96 but may optionally be part of grid controller 96) is provided for controlling switching in DC to DC converters of the solar farms in response to a maximum power point tracking signal. Thus, each solar farm is controlled to operate at an optimum point where maximum power is generated. When the solar farms are situated at different locations, each solar farm may generate different power as compared to power generated by other solar farms. For example, if a solar farm generates higher power, the voltage of that solar farm increases since the DC link current is controlled to be constant. If the voltage of one solar farm increases, it results in increase in the DC link voltage because all solar farm DC to DC converters are connected in series.

Bypass switches 98, 198, 298 and 398 may additionally be connected across the DC to DC converters to enhance bypass capability. The bypass switch causes a short circuit of the respective DC to DC converter when turned on, without short-circuiting DC link capacitors 83, 183, 283, 383. Thus, if one of the solar arrays is needed to be taken out for maintenance or if one of the solar arrays or farms is not providing sufficient current, that array or farm may be bypassed through the respective bypass switch. The solar farm may not provide sufficient current if there is not enough sun light or if there is a fault of the solar modules, for example.

The cables on system DC link 82 may comprise any appropriate insulation material which does not degrade when subject to DC voltages. Several examples include ethylene propylene rubber AC cables, polymer DC cables and Cross-Linked Polyethelene XLPE cables. In one embodiment, there are two DC cables with one being used for carrying positive current and the other being used for carrying negative current. In another embodiment, a coaxial DC cable or a plurality of parallel DC cables may be used for carrying higher currents. Cable housings of DC system link 82 are represented by element 100 of FIG. 3.

The ring formed by system DC link 82 and the series connections in the example of FIG. 3 is grounded through an impedance 102 on the solar farm side in one embodiment in order to avoid system interruptions from pole-to-earth faults. In another embodiment, the ring may be grounded at one of the interconnection points of the DC to AC converters. In yet another embodiment, the ring may be directly grounded or grounded through a low impedance since the system 80 is current controlled (meaning that the DC link current is controlled to be a constant value). Thus, in case of an earth fault on a converter, the fault current will be controlled so as not to result in relevant overcurrent. Some of the controlled current would then partially flow through the earth until the corresponding converters are bypassed. The advantage of grounding the ring at the mid point 101 compared to grounding the ring at end point 103 is that the system insulation requirements are less stringent. These embodiments are for purposes of example, and other types of grounding may be used. In embodiments wherein no galvanic isolation exists between the DC transmission link and the PV modules, the PV panels may be installed on isolators to provide high voltage insulation.

The DC to AC power converter modules 90, 190 typically comprise DC to DC converters 91, 191 and three phase inverters 93, 193. In one embodiment, the DC to DC converters 91, 191 comprise half bridge converters. In a more specific example, the power converters comprise two level inverters, three level inverters, or a combination of two level inverters and three level inverters. In other examples, a higher number of levels may be used. It should also be noted that even though only two DC to AC power converter modules are shown in FIG. 3, in another embodiment a different number of power converter modules may be utilized.

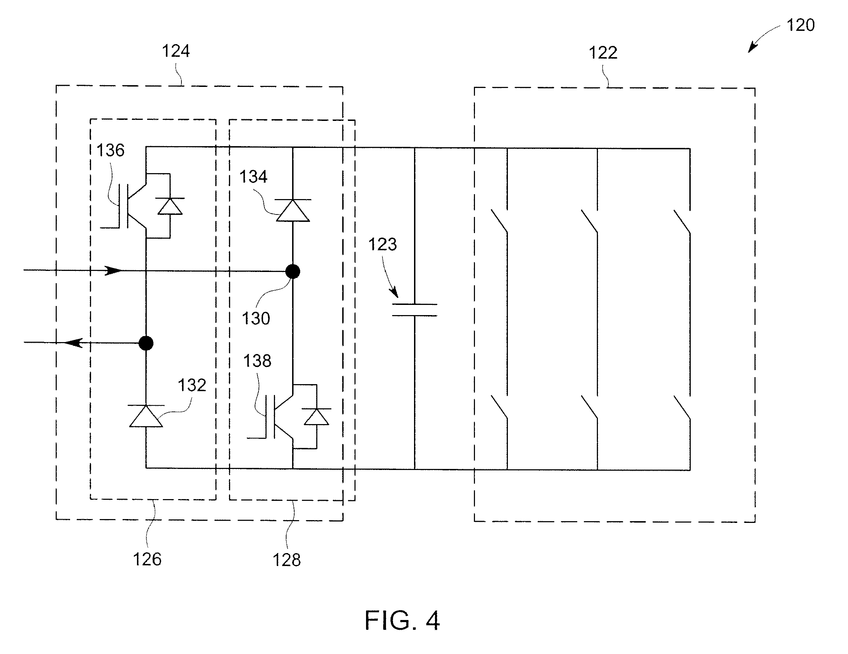

Within the ring formed by system DC link 82, current going into and coming out of each power converter module 88, 188, 288 and 388 will always be the same as the current that is collectively supplied by all the solar farms. In one embodiment, the current through the DC link 82 is controlled to be a constant current. If the power produced by any solar farm increases, the respective voltage is also increased due to the constant current constraint and the extra solar power is supplied to the grid. In some embodiments, the voltage of the system DC link is variable from zero to plus or minus a nominal DC link voltage. In embodiments wherein the DC link current is controlled but the DC link voltage is variable, the series-coupled DC to AC power converter modules 90, 190 may more easily be short-circuited in the event of a fault as described with respect to FIG. 4, for example.

One advantage of the embodiments disclosed herein is the flexibility that is provided by stringing the photovoltaic modules in series through the DC to DC converters. In one embodiment, a DC transmission method comprises providing a system DC link 82 configured for carrying solar power from a solar farms 84, 184, 284 and 384 to the grid 86, and coupling at least two DC to alternating current (AC) power converter modules 90 and 190 in series to system DC link 82 on the grid side of the system DC link. In one embodiment, the method further includes driving a current of the system DC link towards a commanded value in a manner similar to that discussed above. In another embodiment, the method may further comprise later coupling at least one additional DC to AC power converter module 90 in series to the originally-coupled DC to AC power converter modules or decoupling at least one of originally-coupled DC to AC power converter modules (with the "or" meaning either or both). If solar farms 84 exceeds generation and have additional capacity to supply power for the grid 86, an additional DC to AC converter 90 may be connected in series to the already existing converters 90, and this coupling method reduces the capital investment in supplying additional power to the grid 86.

FIG. 4 shows a DC to AC power converter module 120 with bypass capability in accordance with an embodiment of the present invention. The DC to AC converter module 120 comprises an inverter 122 and a half bridge converter 124 coupled between system DC link 82 (FIG. 3) and the inverter 122. A module DC link 123 couples the half bridge converter and the inverter. Inverter 122 may comprise a conventional DC to AC power conversion module using semiconductor switching devices such as IGBTs (insulated gate bipolar transistors), GTOs (gate turn off thyristors), or transistors along with associated controls.

In one example, the half bridge converter comprises an asymmetrical half bridge converter. During normal operation, the half bridge converter is used for controlling input voltages to the inverters 93 and 193 (FIG. 3), and the inverters 93 and 193 are used for controlling the voltages to the grid. The power supplied may be adjusted by controlling the current, the voltage, or a combination of the current and voltage. In an exemplary embodiment, at least one half bridge converter comprises two diode-switch pairs 126 and 128 which each in turn comprise one diode 132 or 134 and one switch 136 or 138. A terminal 130 is configured for receiving input power from the solar farm via the system DC link and supplying the input power to the inverter through diode 132 when both of the switches 136 and 138 are open. Switches 136 and 138 may comprise any appropriate switching devices with several examples including IGBTs and GTOs.

The grid side controller 96 (FIG. 3) is configured for closing at least one of switches 136 and 138 in the event of a fault condition. For example, if there is a short circuit in module DC link 123 between half bridge 124 and inverter 122, the half bridge converter can cause the respective DC to AC power converter module to be in a short circuit condition and avoid feeding the fault. The grid side controller 96 may comprise one or more computers or processors (which may be situated locally, remotely, or both locally and remotely) configured for sending command signals to switches of the half bridge and inverter, for example, and thus short circuit the DC terminals of the power converter module. If either of switches 136 or 138 is closed (that is, turned "on"), then the power converter module is bypassed meaning that no power is provided through it to the grid. This short circuiting feature is useful as an alternative to DC circuit breakers which are typically expensive and complex and may sometimes result in reliability concerns. Another advantage of this embodiment is that a power converter module may independently remain in operation when another (meaning one or more others) of the power converter modules is in a short circuit condition. When one or more power converter modules are bypassed on one side of the system DC link, the resulting system DC link voltage equals to the sum of the remaining half-bridge voltages. In one embodiment, the grid side controller 96 is used to control the ring current to a constant value, in adjusting the sum of the half-bridge voltages on the grid side of the system DC link to the total voltage generated by the MPPT controlled converter modules. Thus the total power transmitted to the grid is instantaneously adapted by adapting the system DC link voltage.

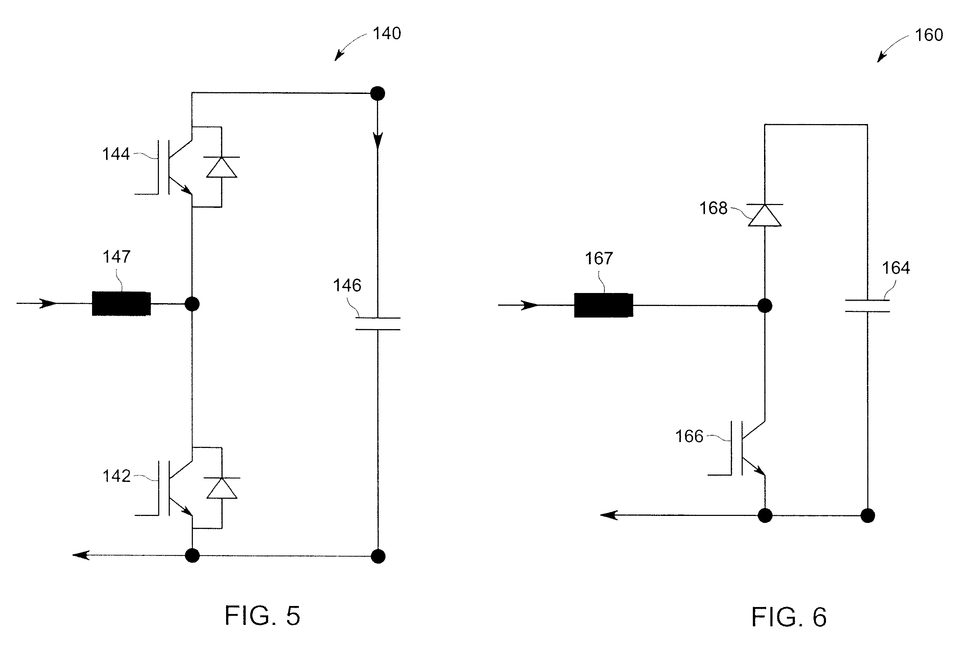

FIG. 5 shows another half bridge converter 140 in accordance with an embodiment of the present invention. The half bridge converter 140 includes two switches 142 and 144 and a module DC link 146. FIG. 5 additionally illustrates an inductor 147 which may comprise either a discrete element or be present as a natural inductance in the line. During normal operation, switch 144 is in a conducting state and switch 142 is in a non-conducting state. Thus, the current is provided to the inverter of the DC to AC power converter module through inductor 147 and the switch 144. During a fault or an abnormal condition, the switch 144 is turned off and the switch 142 is conducting such that the DC to AC power converter module is bypassed.

FIG. 6 shows yet another half bridge converter 160 in accordance with an embodiment of the present invention. The converter 160 includes a diode 168, a switch 166, an inductor 170 and a module DC link 164. During normal operation the switch 166 is turned off and the current passes through the diode 168, whereas during abnormal operation the switch 166 is in a conducting state and bypasses the DC to AC power converter module. It should be noted that embodiments of FIG. 5 and FIG. 6 need less components compared to the embodiment of FIG. 4 and may be utilized if bypass capability by redundant IGBTs (136 and 138 of FIG. 4) is not necessary.

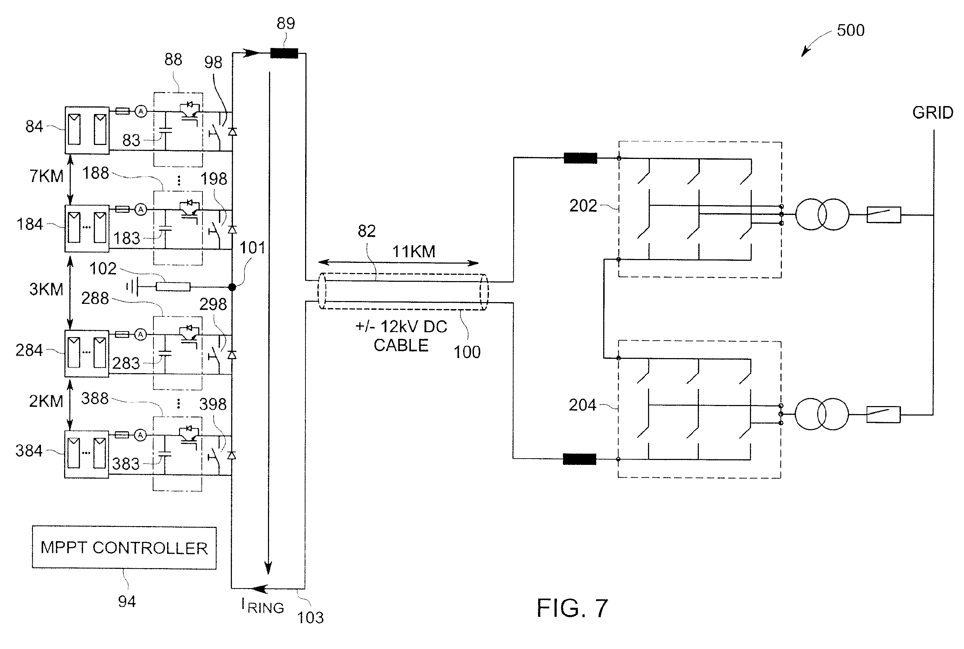

FIG. 7 shows a schematic of a DC transmission system 200 employing current source converters in accordance with an embodiment of the present invention. The solar farm side of the system 200 is similar to the system 80 of FIG. 3. However, on grid side, current source converters 202, 204 are used instead of voltage source converters. As will be appreciated by those skilled in the art, in the current source converter, the input DC power supply is configured as a current source rather than a voltage source. The current source converters may include power electronic switches such as thyristors, Gate turn-off (GTO) thyristors, integrated gate commutated thyristors (IGCTs) or reverse blocking IGBTs. In another embodiment, the power electronic switches may be silicon carbide (SiC) power electronic devices.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A direct current (DC) transmission system for solar arrays comprising:
   a system DC link for receiving power from the solar arrays through series coupled DC to DC converters;
   DC to alternating current (AC) power converter modules coupled in series to the system DC link for providing power to a power grid.
2. The system of clause 1, wherein each DC to AC power converter module comprises a half bridge converter and an inverter.
3. The system of any preceding clause, wherein each inverter comprises a three phase inverter, and each three phase inverter comprises a two level inverter or a three level inverter.
4. The system of any preceding clause, wherein each half bridge converter is configured to short circuit the DC terminals of the DC to AC power converter module upon receipt of a respective command signal, and wherein each DC to AC power converter module is configured to independently remain in operation when another of the DC to AC power converter modules is in a short circuit condition.
5. The system of any preceding clause, wherein at least one half bridge converter comprises two diode switch pairs and a terminal configured for receiving input power and supplying the input power to the inverter through a diode of the diode switch pairs when both of the switches of the diode switch pairs are open.
6. The system of any preceding clause further comprising a controller configured for closing at least one of the switches in the event of a fault condition.
7. The system of any preceding clause, wherein at least one half bridge converter comprises a top switch and a bottom switch connected in series and a terminal configured for receiving input power and supplying the input power to the inverter through the top switch when the bottom switch is open and blocking the input power to the inverter when the bottom switch is closed.
8. The system of any preceding clause, wherein at least one half bridge converter comprises a switch and a diode connected in series and a terminal configured for receiving input power and supplying the input power to the inverter through the diode when the switch is open and blocking the input power to the inverter when the switch is closed.
9. The system of any preceding clause further comprising a grid side controller for driving a current of the system DC link toward a commanded constant value.
10. The system of any preceding clause, wherein a voltage of the system DC link is variable from zero to a nominal DC link voltage.
11. The system of any preceding clause further comprising a bypass switch to bypass the solar array.
12. The system of any preceding clause, wherein a cable of the system DC link comprises ethylene propylene rubber or cross-linked polyethelene.
13. The system of any preceding clause, wherein the DC link is grounded at a mid point of the solar arrays.
14. The system of any preceding clause, wherein the DC link is directly grounded or grounded through a low value impedance.
15. The system of any preceding clause, wherein the solar arrays are installed on isolators to provide high voltage insulation.
16. A direct current (DC) power transmission method for solar arrays comprising:
   providing a system DC link for receiving power from the solar arrays through series coupled DC to DC converters;
   coupling at least two DC to alternating current (AC) power converter modules in series between the system DC link and a power grid; and
   driving a current of the system DC link towards a commanded value.
17. The method of any preceding clause further comprising later coupling at least one additional DC to AC power converter module in series to the originally-coupled DC to AC power converter modules.
18. The method of any preceding clause, wherein a voltage of the system DC link is variable from zero to a nominal DC link voltage.
19. A direct current (DC) transmission system for solar arrays comprising:
   a system DC link for receiving power from the solar arrays through series coupled DC to DC converters; and
   DC to alternating current (AC) current source power converter modules coupled in series between the system DC link and a power grid.
20. The system of any preceding clause, wherein the current source power converter modules comprises thyristors, GTOs, IGCTs or reverse blocking IGBTs.
21. The system of any preceding clause, wherein the current source power converter modules comprises silicon carbide power electronic devices.

## Claims

1. A direct current (DC) transmission system (80) for solar arrays (84, 184, 284, 384) comprising:
a system DC link (82) for receiving power from the solar arrays (84, 184, 284, 384) through series coupled DC to DC converters (88, 188, 288, 388);
DC to alternating current (AC) power converter modules (90, 190) coupled in series to the system DC link (82) for providing power to a power grid (86).

2. The system (80) of claim 1, wherein each DC to AC power converter module (90, 190) comprises a half bridge converter (91, 191) and an inverter (93, 193).

3. The system (80) of claim 2, wherein each half bridge converter (91, 191) is configured to short circuit the DC terminals of the DC to AC power converter module (90, 190) upon receipt of a respective command signal, and wherein each DC to AC power converter module (90, 190) is configured to independently remain in operation when another of the DC to AC power converter modules (90, 190) is in a short circuit condition.

4. The system (80) of claim 2 or claim 3, wherein at least one half bridge converter (124) comprises two diode switch pairs (126, 128) and a terminal (130) configured for receiving input power and supplying the input power to the inverter (122) through a diode (132, 134) of the diode switch pairs when both of the switches (136, 138) of the diode switch pairs are open.

5. The system (80) of claim 2 or any claim dependent thereon, wherein at least one half bridge converter (140) comprises a top switch (144) and a bottom switch (142) connected in series and a terminal configured for receiving input power and supplying the input power to the inverter through the top switch when the bottom switch (142) is open and blocking the input power to the inverter when the bottom switch (142) is closed.

6. The system (80) of claim 2 or any claim dependent thereon, wherein at least one half bridge converter (160) comprises a switch (166) and a diode (168) connected in series and a terminal configured for receiving input power and supplying the input power to the inverter through the diode (168) when the switch (166) is open and blocking the input power to the inverter when the switch (166) is closed.

7. The system (80) of any preceding claim further comprising a grid side controller (96) for driving a current of the system DC link (82) toward a commanded constant value.

8. A direct current (DC) power transmission method for solar arrays (84, 184, 284, 384) comprising:
providing a system DC link (82) for receiving power from the solar arrays (84, 184, 284, 384) through series coupled DC to DC converters (88, 188, 288, 388);
coupling at least two DC to alternating current (AC) power converter modules (90, 190) in series between the system DC link (82) and a power grid (86); and
driving a current of the system DC link (82) towards a commanded value.

9. The method of claim 8 further comprising later coupling at least one additional DC to AC power converter module (90,190) in series to the originally-coupled DC to AC power converter modules.

10. A direct current (DC) transmission system (500) for solar arrays (84, 184, 284, 384) comprising:
a system DC link (82) for receiving power from the solar arrays (84, 184, 284, 384) through series coupled DC to DC converters (88, 188, 288, 388); and
DC to alternating current (AC) current source power converter modules (202, 204) coupled in series between the system DC link (82) and a power grid (206).
